(19) Europäisches Patentamt
European Patent Office
Office européen des brevets

(11) EP 2 354 214 B2

(12) NEW EUROPEAN PATENT SPECIFICATION
After opposition procedure

(45) Date of publication and mention of the opposition decision:
**08.06.2022 Bulletin 2022/23**

(45) Mention of the grant of the patent:
**13.06.2012 Bulletin 2012/24**

(21) Application number: **10150161.7**

(22) Date of filing: **06.01.2010**

(51) International Patent Classification (IPC):
***C11D 1/72*** (2006.01) ***C11D 1/83*** (2006.01)
***C11D 3/42*** (2006.01) ***C11D 10/04*** (2006.01)

(52) Cooperative Patent Classification (CPC):
**C11D 3/42; C09B 69/00; C11D 1/83; C11D 10/045;**
C11D 1/146; C11D 1/22; C11D 1/29; C11D 1/72

(54) **Surfactant ratio in dye formulations**

Tensidverhältnis in Farbstoffformulierungen

Taux d'agent tensioactif dans des formulations de colorants

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**10.08.2011 Bulletin 2011/32**

(73) Proprietors:
- **Unilever IP Holdings B.V.**
  **3013 AL Rotterdam (NL)**
  Designated Contracting States:
  **AT BE BG CH CZ DK EE ES FI FR GR HR HU IS LI LT LU LV MC MK NL NO PL PT RO SE SI SK SM TR**
- **Unilever Global IP Limited**
  **Wirral, Merseyside CH62 4ZD (GB)**
  Designated Contracting States:
  **CY DE GB IE IT MT**

(72) Inventors:
- **Batchelor, Stephan Norman**
  **Bebington, Wirral**
  **Merseyside CH63 3JW (GB)**
- **Bird, Jayne Michelle**
  **Bebington, Wirral**
  **Merseyside CH63 3JW (GB)**

(74) Representative: **Brooijmans, Rob Josephina Wilhelmus**
**Unilever N.V.**
**Unilever Patent Group**
**Bronland 14**
**6708 WH Wageningen (NL)**

(56) References cited:
**WO-A1-2007/096066** **WO-A1-2007/096067**
**WO-A1-2007/096068** **WO-A1-2008/087497**
**WO-A1-2011/060109** **US-A- 5 770 552**
**US-A1- 2005 288 206** **US-B2- 7 208 459**



Processed by Luminess, 75001 PARIS (FR)

## Description

### Field of Invention

The present invention concerns a domestic method of treating a laundry textile.

### BACKGROUND OF THE INVENTION

Anionic surfactants are widely used in main wash detergents. To increase the cleaning ability of forumulations non-ionic surfactants are added.

WO2006/045375 (Unilever), US7208459 (Procter and Gamble) and WO2008/087497 (Procter and Gamble) disclose the use of uncharged blue or violet dyes with alkoxy chains in detergent formulations. The alkoxylated dyes deposit to fabrics and enhance garment whiteness.

It is desirable to have higher whiteness to synthetic garments.

### SUMMARY OF THE INVENTION

The present invention provides a domestic method of treating a laundry textile that provides a greater whiteness benefit to a nylon and elastane synthetic garment.

The present invention provides a domestic method of treating a laundry textile according to claim 1.

### DETAILED DESCRIPTION OF THE INVENTION

### ALKOXYLATED DYES

The alkoxylated dye is blue or violet. Preferably the blue or violet alkoxylated dye gives a blue or violet colour to the cloth with a hue angle of 250 to 345, more preferably 265 to 330, most preferably 270 to 300. The cloth used to determine the hue angle is white bleached non-mercerised woven cotton sheeting.

The dye has a molar extinction coefficient at a wavelength in the range 400 to 700nm of at least 1000 $mol^{-1}$ L $cm^{-1}$, preferably greater than 6000 $mol^{-1}$ L $cm^{-1}$.

The alkoxylated dyes of are of the following generic form: Dye-$NR_1R_2$. The $NR_1R_2$ group is attached to an aromatic ring of the dye. $R_1$ and $R_2$ are independently selected from polyoxyalkylene chains having 2 or more repeating units and preferably having 2 to 20 repeating units. Examples of polyoxyalkylene chains include ethylene oxide, propylene oxide, glycidol oxide, butylene oxide and mixtures thereof.

The alkoxylated dye is uncharged in contrast to anionic and cationic dyes; the alkoxylated dye per se is neutral in an aqueous medium at pH 7. The alkoxylated dye does not have sulphonate nor carboxylate groups nor cationic groups.

A preferred polyoxyalkylene chain is $[(CH_2CR_3HO)_x(CH_2CR_4HO)_yR_5)$ in which $x+y \leq 5$ wherein $y \geq 1$ and $z = 0$ to 5, $R_3$ is selected from: H; $CH_3$; $CH_2O(CH_2CH_2O)_zH$ and mixtures thereof; $R_4$ is selected from: H; $CH_2O(CH_2CH_2O)_zH$ and mixtures thereof; and, $R_5$ is selected from: H; and, $CH_3$

Preferably the dye is an anthraquinone or an azo dye.

Preferably the alkoxylated dye is a mono-azo dye.

Preferably the alkoxylated dye is of the structure:

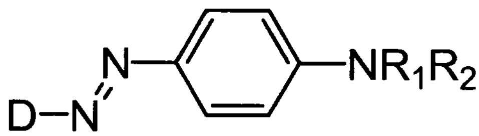

D denotes an aromatic or hetroaromatic group. Preferably D is selected from the group consisting of: azothiophenes, azobenzothiazoles and azopyridones. The aromatic rings may be further substituted. Most preferably the dye is an azo thiophene.

Most preferably the dye is selected from

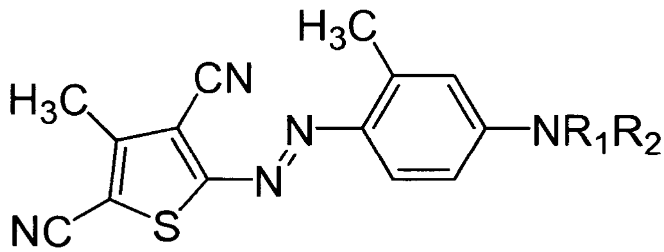

SURFACTANT

The composition comprises between 2 to 70 wt% of a surfactant, most preferably 10 to 30 wt %. In general, the anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside Taschenbuch", H. Stache, 2nd Edn., Carl Hauser Verlag, 1981. Preferably the surfactants used are saturated.

1) Anionic Surfactants

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulphates, especially those ethers of the higher alcohols derived from tallow or coconut oil and synthetic alcohols derived from petroleum. Most preferred anionic surfactants are sodium lauryl ether sulfate (SLES), particularly preferred with 1 to 3 ethoxy groups, sodium $C_{10}$ to $C_{15}$ alkyl benzene sulphonates and sodium $C_{12}$ to $C_{18}$ alkyl sulphates. Also applicable are surfactants such as those described in EP-A-328 177 (Unilever), which show resistance to salting-out, the alkyl polyglycoside surfactants described in EP-A-070 074, and alkyl monoglycosides. The chains of the surfactants may be branched or linear.

Soaps are also preferred. The fatty acid soap used preferably contains from about 16 to about 22 carbon atoms, preferably in a straight chain configuration. The anionic contribution from soap is preferably from 0 to 30 wt% of the total anionic.

Preferably, at least 50 wt % of the anionic surfactant are selected from: sodium $C_{11}$ to $C_{15}$ alkyl benzene sulphonates; and, sodium $C_{12}$ to $C_{18}$ alkyl sulphates. Even more preferably, the anionic surfactant is sodium $C_{11}$ to $C_{15}$ alkyl benzene sulphonates.

2) Non-Ionic Surfactants

The nonionic surfactant is as specified in claim 1.

BUILDER

The formulation may contain a builder.

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetraacetic acid.

Examples of precipitating builder materials include sodium orthophosphate and sodium carbonate. Preferably, the laundry treatment composition comprises sodium carbonate in the range from 5 to 50 wt%, most preferably 10 to 35 wt%. In the method, when used with granular laundry treatment composition, the aqueous wash solution preferably comprises 0.1 to 4 g/L of sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65% of a builder or complexing agent such as ethylenediaminetetraacetic acid, diethylenetriamine-pentaacetic acid, alkyl- or alkenylsuccinic acid, nitrilotriacetic acid or the other builders mentioned

below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$$0.8\text{-}1.5\ M_2O.\ Al_2O_3.\ 0.8\text{-}6\ SiO_2$$

where M is a monovalent cation, preferably sodium. These materials contain some bound water and are required to have a calcium ion exchange capacity of at least 50 mg CaO/g.

The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate.

## ENZYMES

The composition may comprise one or more enzymes, which provide cleaning performance, fabric care and/or sanitation benefits.

Especially contemplated enzymes include proteases, alpha-amylases, cellulases, lipases, peroxidases/oxidases, pectases, lyases, and mannanases, or mixtures thereof.

Most suitable lipases are disclosed in WO 2007/087257, WO2009/107091 and WO2009/111258.

## FLUORESCENT AGENT

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

## PERFUME

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

## Experimental

Woven cotton fabric, knitted nylon-elastane (80:20) and knitted microfiber polyester fabric were washed in an aqueous wash solution (demineralised water) containing 1g/L surfactant, 1g/L sodium carbonate and 1g/L sodium chloride at a liquor to cloth ratio of 30:1. The surfactant system was chosen from various ratio's of Linear Alkyl benzene sulfonate

(LAS) : NI(7EO) which is $R-(OCH_2CH_2)_nOH$, where R is an alkyl chain of C12 to C15, and n is 7. To the wash solution an alkoxylated shading dye was added such that the wash solution contained nominally 0.5 ppm of the dye. The alkoxylated shading dye used was:

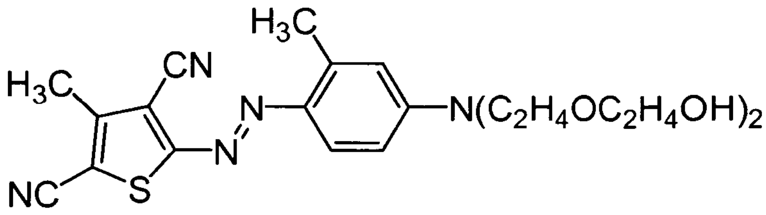

.

After 30 minutes of agitation the cloths were removed rinsed and dried. Washes were then repeated until 4 wash cycles had been accomplished. After the $4^{th}$ wash the reflectance spectra of the cloth were measured on a reflectometer and the colour expressed as CIE L* a* b* values.

The increased in whiteness of the cloth was expressed as the change in blue:

$$\Delta b = b_{before}\text{ wash} - b_{after}\text{ wash}.$$

The results are given in the table below

| LAS:NI | Δb | | |
|---|---|---|---|
| | Nylon-elastane | polyester | cotton |
| 0:100 | 6.9 | 2.3 | 3.2 |
| 25:75 | 5.9 | 2.0 | 2.8 |
| 50:50 | 4.9 | 1.9 | 3.0 |
| 75:25 | 4.3 | 1.9 | 2.9 |
| 100:0 | 3.5 | 1.8 | 3.0 |

The dye deposits from all surfactant systems. There is higher deposition to the synthetic fabrics from the surfactant systems with higher levels of anionic surfactants.

## Claims

1. A domestic method of treating a laundry textile, the method comprising the steps of:

    (i) treating a textile with an aqueous solution of 1 to 10 g/L of a formulation;
    (ii) optionally rinsing; and,
    (iii) drying the textile, wherein the laundry detergent formulation comprises:

        (i) from 0.0001 to 0.01 wt% of a blue or violet uncharged alkoxylated dye; and,
        (ii) from 2 to 70 wt% of surfactant selected from anionic and non-ionic surfactants, wherein the weight ratio of anionic:non-ionic surfactant is from 50:50 to 0:100 and the non-ionic surfactant is an alkyl ethoxylate,

    wherein the textile is a synthetic garment which is a nylon and elastane synthetic garment.

2. A domestic method of treating a laundry textile according to claim 1, wherein the weight ratio of anionic: non-ionic surfactant is from 40:60 to 0:100.

3. A domestic method of treating a laundry textile according to claim 2, wherein the weight ratio of anionic:non-ionic surfactant is from 25:75 to 0:100.

**4.** A domestic method of treating a laundry textile as defined in any one of the preceding claims, wherein the anionic surfactants are selected from: sodium lauryl ether sulfate **(SLES) with** 1 to 3 ethoxy groups; sodium $C_{11}$ to $C_{15}$ alkyl benzene sulphonates; sodium $C_{12}$ to $C_{18}$ alkyl sulphates; and, soap.

**5.** A domestic method of treating a laundry textile as defined in any one of the preceding claims, wherein at least 50 wt % of the anionic surfactant are selected from: sodium $C_{10}$ to $C_{15}$ alkyl benzene sulphonates; and, sodium $C_{12}$ to $C_{18}$ alkyl sulphates.

**6.** A domestic method of treating a laundry textile as defined in any one of the preceding claims, wherein the alkoxylated dye is of the form Dye-$NR_1R_2$, wherein the $NR_1R_2$ group is attached to an aromatic ring of the dye and $R_1$ and $R_2$ are independently selected from polyoxyalkylene chains having 2 or more repeating units.

**7.** A domestic method of treating a laundry textile as defined in claim 6, wherein the dye is an anthraquinone or an azo dye.

**8.** A domestic method of treating a laundry textile as defined in claim 7, wherein the allkoxylated dye is of the structure:

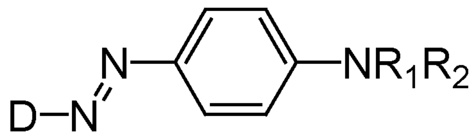

wherein D is aromatic or hetroaromatic group.

**9.** A domestic method of treating a laundry textile as defined in claim 8, wherein the dye is:

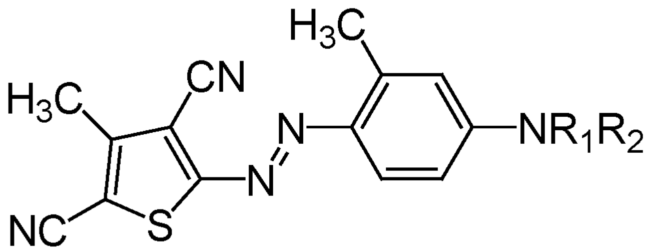

.

**10.** A domestic method of treating a laundry textile as defined in any one of the preceding claims, wherein the laundry detergent formulation is granular.

**Patentansprüche**

**1.** Haushaltsverfahren zur Behandlung einer Wäschetextilie, wobei das Verfahren die Schritte umfasst:

(i) Behandlung einer Textilie mit einer wässrigen Lösung von 1 bis 10 g/l einer Formulierung;
(ii) gegebenenfalls Spülen, und
(iii) Trocknen der Textilie, wobei die Waschmittelformulierung umfasst:

(i) 0,0001 bis 0,01 Gew.-% eines blauen oder violetten ungeladenen alkoxylierten Farbstoffs; und
(ii) 2 bis 70 Gew.-% Tensid, das aus anionischen und nicht-ionischen Tensiden ausgewählt ist, wobei das Gewichtsverhältnis anionisches : nicht-ionisches Tensid von 50:50 bis 0:100 ist und das nicht-ionische Tensid ein Alkylethoxylat ist,

wobei die Textilie ein synthetisches Kleidungsstück ist, welches ein synthetisches Nylon- und Elastan-Bekleidungsstück ist.

**2.** Haushaltsverfahren zur Behandlung einer Wäschetextilie nach Anspruch 1, wobei das Gewichtsverhältnis anionisches : nicht-ionisches Tensid von 40:60 bis 0:100 ist.

3. Haushaltsverfahren zur Behandlung einer Wäschetextilie nach Anspruch 2, wobei das Gewichtsverhältnis anionisches : nicht-ionisches Tensid von 25:75 bis 0:100 ist.

4. Haushaltsverfahren zur Behandlung einer Wäschetextilie, wie es in irgendeinem der vorhergehenden Ansprüche definiert ist, wobei die anionischen Tenside ausgewählt sind aus: Natriumlaurylethersulfat (SLES) mit 1 bis 3 Ethoxygruppen; Natrium-$C_{11}$-bis $C_{15}$-alkylbenzolsulfonaten; Natrium-$C_{12}$- bis $C_{18}$-alkylsulfaten und Seife.

5. Haushaltsverfahren zur Behandlung einer Wäschetextilie, wie es in irgendeinem der vorhergehenden Ansprüche definiert ist, wobei mindestens 50 Gew.-% des anionischen Tensids aus Natrium-Cio- bis $C_{15}$-alkylbenzolsulfonaten und Natrium-$C_{12}$- bis $C_{18}$-alkylsulfaten ausgewählt sind.

6. Haushaltsverfahren zur Behandlung einer Wäschetextilie, wie es in irgendeinem der vorhergehenden Ansprüche definiert ist, wobei der alkoxylierte Farbstoff die Form Farbstoff-$NR_1R_2$ hat, wobei die $NR_1R_2$-Gruppe an einen aromatischen Ring des Farbstoffs gebunden ist und $R_1$ und $R_2$ unabhängig aus Polyoxyalkylenketten mit 2 oder mehr sich wiederholenden Einheiten ausgewählt sind.

7. Haushaltsverfahren zur Behandlung einer Wäschetextilie, wie es im Anspruch 6 definiert ist, wobei der Farbstoff ein Anthrachinon- oder ein Azo-Farbstoff ist.

8. Haushaltsverfahren zur Behandlung einer Wäschetextilie, wie es im Anspruch 7 definiert ist, wobei der alkoxylierte Farbstoff die Struktur

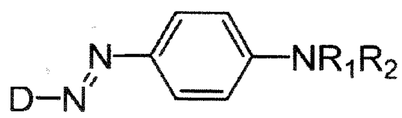

hat,
wobei D eine aromatische oder heteroaromatische Gruppe ist.

9. Haushaltsverfahren zur Behandlung einer Wäschetextilie, wie es im Anspruch 9 definiert ist, wobei der Farbstoff

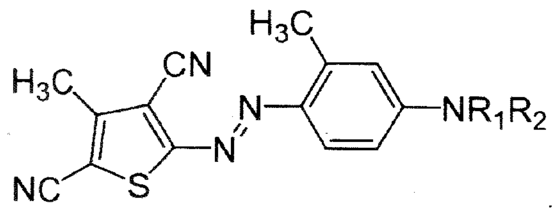

ist.

10. Haushaltsverfahren zur Behandlung einer Wäschetextilie, wie es in irgendeinem der vorangehenden Ansprüche definiert ist, wobei die Waschmittelformulierung körnig ist.

## Revendications

1. Procédé ménager de traitement d’un textile de blanchisserie, le procédé comprenant les étapes de :

(i) traitement d’un textile avec une solution aqueuse de 1à 10 g/L d’une formulation ;
(ii) éventuellement rinçage ; et,
(iii) séchage du textile, dans lequel la formulation de détergent de blanchisserie comprend :

(i) de 0,0001 à 0,01 % en poids d’un colorant alcoxylé non chargé bleu ou violet ; et,
(ii) de 2 à 70 % en poids d’un tensioactif choisi parmi les tensioactifs anioniques et non-ioniques, dans lequel le rapport en poids des tensioactifs anioniques : non ioniques est de 50:50 à 0:100 et le tensioactif non ionique est un éthoxylate d’alkyle,

dans lequel le textile est un vêtement synthétique qui est un vêtement synthétique en nylon et élastane.

2. Procédé ménager de traitement d'un textile de blanchisserie selon la revendication 1, dans lequel le rapport en poids de tensioactif anionique : non-ionique est de 40:60 à 0:100.

3. Procédé ménager de traitement d'un textile de blanchisserie selon la revendication 2, dans lequel le rapport en poids de tensioactif anionique : non ionique est de 25:75 à 0:100.

4. Procédé ménager de traitement d'un textile de blanchisserie selon l'une quelconque des revendications précédentes, dans lequel les tensioactifs anioniques sont choisis parmi : le lauryléthersulfate de sodium (SLES) comprenant 1 à 3 groupes éthoxy ; les (alkyl en $C_{11}$-$C_{15}$)-benzène-sulfonates de sodium ; les (alkyl en $C_{12}$-$C_{18}$)-sulfates de sodium ; et un savon.

5. Procédé ménager de traitement d'un textile de blanchisserie selon l'une quelconque des revendications précédentes, dans lequel au moins 50 % en poids du tensioactif anionique sont choisis parmi : les (alkyl en $C_{10}$-$C_{15}$)-benzène-sulfonates de sodium ; et les (alkyl en $C_{12}$-$C_{18}$)-sulfates de sodium.

6. Procédé ménager de traitement d'un textile de blanchisserie selon l'une quelconque des revendications précédentes, dans lequel le colorant alcoxylé est sous forme Colorant-$NR_1R_2$, où le groupe $NR_1R_2$ est fixé à un noyau aromatique du colorant et $R_1$ et $R_2$ sont choisis indépendamment parmi les chaînes de polyoxyalkylène comportant 2 motifs récurrents ou plus.

7. Procédé ménager de traitement d'un textile de blanchisserie selon la revendication 6, dans lequel le colorant est une anthraquinone ou un colorant azoïque.

8. Procédé ménager de traitement d'un textile de blanchisserie selon la revendication 7, dans lequel le colorant alcoxylé a la structure :

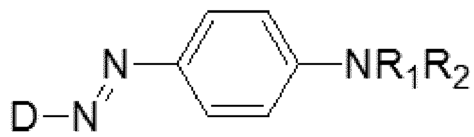

dans laquelle D est un groupe aromatique ou hétéroaromatique.

9. Procédé ménager de traitement d'un textile de blanchisserie selon la revendication 8, dans lequel le colorant est :

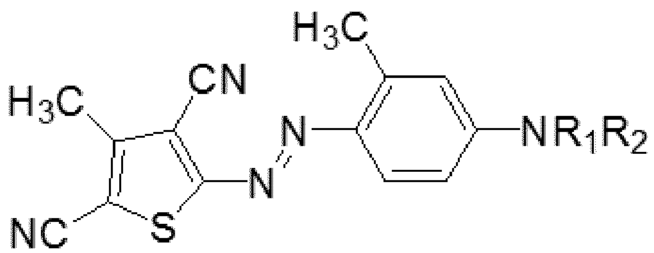

10. Procédé ménager de traitement d'un textile de blanchisserie selon l'une quelconque des revendications précédentes, dans lequel la formulation de détergent pour lessive est granulaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006045375 A
- US 7208459 B
- WO 2008087497 A
- EP 328177 A
- EP 070074 A
- EP 0384070 A
- WO 2007087257 A
- WO 2009107091 A
- WO 2009111258 A


### Non-patent literature cited in the description


- **SCHWARTZ ; PERRY.** Surface Active Agents. Interscience, 1949, vol. 1
- **SCHWARTZ ; PERRY ; BERCH.** SURFACE ACTIVE AGENTS. Interscience, 1958, vol. 2
- McCutcheon's Emulsifiers and Detergents. Manufacturing Confectioners Company
- **H. STACHE.** Tenside Taschenbuch. Carl Hauser Verlag, 1981
- International Buyers Guide. CFTA Publications and OPD, 1992
- Chemicals Buyers Directory. Schnell Publishing Co, 1993
- **POUCHER.** *Journal of the Society of Cosmetic Chemists,* 1955, vol. 6 (2), 80